# EUROPÄISCHE PATENTSCHRIFT

(11) **EP 3 405 324 B1**
(45) Veröffentlichungstag und Bekanntmachung des Hinweises auf die Patenterteilung: **02.06.2021**
(21) Anmeldenummer: 17700283.9
(22) Anmeldetag: 12.01.2017
(51) Int. Cl.: B29C 45/56

(54) **VERFAHREN ZUM SPRITZGIESSEN EINES KUNSTSTOFFBAUTEILS UND KUNSTSTOFFBAUTEIL**
PROCESS FOR INJECTION MOLDING A PLASTIC PRODUCT AND SUCH A PLASTIC PRODUCT
PROCÉDÉ DE MOULAGE PAR INEJCTION UN PRODUIT EN MATIÈRE PLASTIQUE ET UN TEL PRODUIT

(30) Priorität: 21.01.2016 DE 102016100970; 21.01.2016 DE 202016100255 U
(43) Veröffentlichungstag der Anmeldung: 28.11.2018
(73) Patentinhaber: HOPPE Kunststoffspritzerei und Formenbau GmbH & Co. KG, 15831 Blankenfelde-Mahlow (DE)
(72) Erfinder: LIEFLÄNDER, Martin, 15831 Blankenfelde-Mahlow (DE)
(74) Vertreter: Horn Kleimann Waitzhofer Patentanwälte PartG mbB
(86) Internationale Anmeldenummer: PCT/EP2017/050519
(87) Internationale Veröffentlichungsnummer: WO 2017/125303

(56) Entgegenhaltungen:
- WO-A1-2014/196736
- DE-A1-102007 043 473
- DE-A1-102010 001 435
- GB-A- 753 410
- GB-A- 926 480
- JP-B2- 3 092 488
- US-A- 3 461 488
- US-A- 4 280 976
- US-A1- 2002 074 694

## Beschreibung

Die vorliegende Erfindung betrifft ein Verfahren zum Herstellen eines Kunststoffbauteils und ein mit diesem Verfahren hergestelltes Kunststoffbauteil.

Zum Herstellen von Bohrungen und Hohlräumen in Kunststoffbauteilen ist es bekannt, Spritzgusswerkzeuge mit verschiebbaren Kernen einzusetzen. Zum Bilden einer Bohrung in einem Kunststoffbauteil wird ein derartiger Kern mit einem aufgeschmolzenem Kunststoffmaterial umspritzt und nach dem Erstarren des Kunststoffmaterials aus diesem herausgezogen. Wenn eine durchgängige, das heißt, eine beidseitig offene, Bohrung zur Herstellung einer gewissen Funktionalität verschlossen werden muss, kann in einem weiteren Schritt ein Verschluss in die Bohrung eingesetzt werden. Beispielsweise kann hierzu eine Stahlkugel in die Bohrung eingepresst werden. Die Stahlkugel wird nach dem Spritzgießen des Kunststoffbauteils in die Bohrung eingepresst, wozu das Kunststoffbauteil und die Stahlkugel in eine geeignete Montagevorrichtung eingelegt werden.

Die US 3,461,488 A beschreibt eine zweiteilige Verschlusskappe, die in einem Spritzgusswerkzeug spritzgegossen und anschließend durch lineares Ineinanderschieben zweier Einzelteile in dem Spritzgusswerkzeug montiert wird.

Die GB 926 480 A zeigt ein Verfahren, bei dem ein Spritzgussbauteil mit Hilfe eines Spritzgusswerkzeugs spritzgegossen und anschließend montiert wird.

Die GB 753 410 beschreibt ein Spritzgussverfahren zum Spritzgießen eines rohrförmigen Befestigungsmittels.

Die US 4,280,976 A zeigt ein Spritzgussverfahren zum Herstellen eines Deckels mit einem einschraubbaren Verschluss.

Die WO 2014/196736 A1 beschreibt einen Wasserhahn, der aus mehreren spritzgegossenen Einzelbauteilen aufgebaut ist.

Die US 2002/0074694 A1 zeigt einen elektrischen Verbinder, der ein spritzgegossenes Gehäuse aufweist. Das Gehäuse umfasst eine Aufnahmeöffnung, in die ein spritzgegossenes Zusatzbauteil eingeschoben wird.

Die DE 10 2007 043 473 A1 beschreibt eine Gleitlageranordnung für ein bewegbares Schaltelement in einer Schaltvorrichtung sowie eine Schaltvorrichtung mit einer derartigen Gleitlageranordnung.

Die JP 3092488 B2 zeigt ein Verfahren und eine Form zum Spritzgießen.

Die DE 10 2010 001 435 A1 beschreibt ein Buchsengehäuse mit einem Innenteil und einem Außenteil, wobei das Innenteil zur Aufnahme mindestens eines elektrisch leitfähigen Kontaktelements ausgebildet ist und eine Wandung des Außenteils einen Hohlraum umgrenzt.

Vor diesem Hintergrund besteht eine Aufgabe der vorliegenden Erfindung darin, ein verbessertes Verfahren zum Herstellen eines Kunststoffbauteils zur Verfügung zu stellen.

Demgemäß wird ein Verfahren zum Herstellen eines Kunststoffbauteils vorgeschlagen. Das Kunststoffbauteil ist ein Gehäuse einer Saugstrahlpumpe. Das Verfahren umfasst die folgenden Schritte: Spritzgießen eines Basiskörpers des Kunststoffbauteils mit Hilfe eines Spritzgusswerkzeugs, wobei zum Bilden einer Bohrung in dem Basiskörper ein stiftförmiger Kern des Spritzgusswerkzeugs mit einem Kunststoffmaterial umspritzt wird, Spritzgießen eines Verschlusses des Kunststoffbauteils zum Verschließen der Bohrung, Entfernen des Kerns aus der Bohrung und Verschließen der Bohrung mit Hilfe des Verschlusses, wobei der Basiskörper so gefertigt wird, dass dieser einen Aufnahmeabschnitt zum Aufnehmen des Verschlusses aufweist, wobei eine Mittelachse der Bohrung in einem Winkel von 90° +/- 10° zu einer Mittelachse des Aufnahmeabschnitts angeordnet wird, und wobei der Verschluss in den Aufnahmeabschnitt eingepresst wird. Das Spritzgießen des Basiskörpers, das Spritzgießen des Verschlusses, das Entfernen des Kerns und das Verschließen der Bohrung mit Hilfe desselben Spritzgusswerkzeugs durchgeführt.

Das Kunststoffbauteil kann auch als Kunststoffspritzgussbauteil bezeichnet werden. Zum Verschließen der Bohrung kann der Verschluss mit Hilfe eines Schiebers des Spritzgusswerkzeugs verschoben werden. Das Kunststoffmaterial kann ein beliebiges thermoplastisches Kunststoffmaterial sein. Das Kunststoffmaterial kann faserverstärkt, insbesondere glasfaserverstärkt oder kohlenstofffaserverstärkt, sein. Die Bohrung kann auch als Öffnung, Ausnehmung oder Durchbruch bezeichnet werden. Die Bohrung ist beidseitig offen, das heißt, sie durchdringt den Basiskörper. Vorzugsweise weist die Bohrung einen kreisrunden Querschnitt auf. Die Bohrung kann allerdings auch einen rechteckigen, dreieckigen oder beliebigen Querschnitt aufweisen. Dadurch, dass der Verschluss vorzugsweise zusammen mit dem Basiskörper hergestellt wird, kann auch auf ein zusätzliches Bauteil, wie beispielsweise eine Stahlkugel, verzichtet werden. Durch den Verzicht auf die Stahlkugel können die Kosten für die Stahlkugel und die Montage derselben eingespart werden. Ferner können Montagefehler bei der Montage der Stahlkugel ausgeschlossen werden.

Gemäß einer Ausführungsform werden das Spritzgießen des Basiskörpers und das Spritzgießen des Verschlusses gleichzeitig durchgeführt.

Vorzugsweise werden der Basiskörper und der Verschluss aus dem gleichen Kunststoffmaterial gefertigt. Insbesondere weist das Spritzgusswerkzeug eine Kavität auf, die eine gemeinsame Negativform des Basiskörpers und des Verschlusses bildet.

Das Spritzgießen des Basiskörpers, das Spritzgießen des Verschlusses, das Entfernen des Kerns und das Verschließen der Bohrung mit Hilfe desselben Spritzgusswerkzeugs durchgeführt.

Hierdurch kann auf zusätzliche Werkzeuge oder zusätzliche Fertigungsschritte verzichtet werden. Vorzugsweise weist das Spritzgusswerkzeug zumindest zwei Formhälften auf, die ein Negativ einer Außengeometrie des Kunststoffbauteils bilden. Es kann eine Vielzahl verschiedener Kerne oder Schieber vorgesehen sein. Der oder die Kerne und der oder die Schieber sind in die Formhälften des Spritzgusswerkzeugs hinein und aus diesen herausfahrbar und bilden mit den Formhälften eine Kavität des Spritzgusswerkzeugs. Die Kavität ist ein Negativ des Kunststoffbauteils und wird zum Bilden desselben mit dem aufgeschmolzenem Kunststoffmaterial befüllt.

Gemäß einer weiteren Ausführungsform wird der Verschluss materialeinstückig mit dem Basiskörper gefertigt.

Unter einer materialeinstückigen Verbindung ist eine stoffschlüssige Verbindung zu verstehen, bei der sowohl der Verschluss als auch der Basiskörper aus demselben Material gefertigt sind und fest miteinander verbunden sind. Alternativ kann der Verschluss unabhängig von dem Basiskörper als eigenes Bauteil gefertigt werden.

Gemäß einer weiteren Ausführungsform wird der Verschluss mit Hilfe eines Kunststofffilms materialeinstückig mit dem Basiskörper verbunden.

Der Kunststofffilm kann auch als Kunststofffolie bezeichnet werden. In dem Spritzgusswerkzeug ist vorzugsweise eine Dünnstelle vorgesehen, durch die das aufgeschmolzene Kunststoffmaterial von dem Basiskörper in den Verschluss oder umgekehrt fließen kann. Die Dünnstelle bildet den Kunststofffilm aus. Der Kunststofffilm kann umlaufend um den Verschluss vorgesehen sein. Der Kunststofffilm kann auch brückenartig unterbrochen sein. Der Kunststofffilm kann beispielsweise eine Dicke von 0,05 bis 0,2 mm aufweisen.

Gemäß einer weiteren Ausführungsform wird der Verschluss vor oder bei dem Verschließen der Bohrung von dem Basiskörper getrennt, insbesondere abgebrochen.

Vorzugsweise wird der Verschluss dann von dem Basiskörper getrennt, wenn der Verschluss mit Hilfe des Schiebers bewegt wird. Der Verschluss kann durch ein Zerreißen des Kunststofffilms von dem Basiskörper getrennt werden.

Gemäß einer weiteren Ausführungsform wird die Bohrung so gefertigt, dass diese an einem ersten Endabschnitt eine Düse aufweist, wobei an einem zweiten Endabschnitt der Bohrung der Verschluss angebracht wird.

Die Düse kann vorzugsweise als Venturidüse wirken. Beim Fertigen der Bohrung ist diese beidseits geöffnet. Für die Funktionalität der Düse ist es insbesondere erforderlich, dass die Bohrung an dem zweiten Endabschnitt verschlossen wird. Da ein Durchmesser der Düse vorzugsweise deutlich kleiner ist als ein Innendurchmesser der Bohrung, kann der Kern nur durch den zweiten Endabschnitt entformt werden. Ein einseitiges Verschließen der Bohrung an dem zweiten Endabschnitt ist also unmittelbar bei dem Spritzgießen des Kunststoffbauteils nicht möglich. Aus diesem Grund wird der zweite Endabschnitt unmittelbar nach dem Spritzgießen vorzugsweise noch im Spritzgusswerkzeug mit Hilfe des Verschlusses verschlossen.

Der Basiskörper wird so gefertigt, dass dieser einen Aufnahmeabschnitt zum Aufnehmen des Verschlusses aufweist.

Der Aufnahmeabschnitt ist vorzugsweise zylinderförmig. Insbesondere ist auch der Verschluss zylinderförmig. Vorzugsweise weisen der Aufnahmeabschnitt und der Verschluss jeweils eine kreisförmige Querschnittsgeometrie auf. Der Aufnahmeabschnitt und der Verschluss können allerdings auch jede beliebige andere Querschnittsgeometrie aufweisen. Der Verschluss kann einen rohrförmigen Mantelabschnitt und eine mittig an und senkrecht zu dem Mantelabschnitt angeordnete Zwischenwand aufweisen. Beidseits der Zwischenwand kann eine kegelstumpfförmige Ausnehmung an dem Verschluss vorgesehen sein. Hierdurch kann Kunststoffmaterial beim Herstellen des Verschlusses eingespart werden und eine Materialschrumpfung auf Grund einer zu großen Materialanhäufung kann verhindert werden.

Gemäß einer weiteren Ausführungsform wird eine Mittelachse der Bohrung senkrecht zu einer Mittelachse des Aufnahmeabschnitts angeordnet.

Hierdurch wird auch bei Druckspitzen zuverlässig verhindert, dass der Verschluss aus dem Aufnahmeabschnitt herausgedrückt wird, da der Druck entlang der Mittelachse der Bohrung und damit senkrecht zu der Mittelachse des Aufnahmeabschnitts wirkt.

Gemäß einer weiteren Ausführungsform werden der Verschluss und der Aufnahmeabschnitt so gefertigt, dass ein Außendurchmesser des Verschlusses größer als ein Innendurchmesser des Aufnahmeabschnitts ist.

Hierdurch kann der Verschluss in den Aufnahmeabschnitt eingepresst werden. Vorzugsweise liegt dann eine Presspassung vor. Hierdurch ist zum einen gewährleistet, dass der Verschluss sicher in dem Aufnahmeabschnitt aufgenommen ist und zum anderen wird hierdurch ein fluiddichter Abschluss der Bohrung erzielt.

Der Verschluss wird in den Aufnahmeabschnitt eingepresst.

Hierbei wird der Verschluss mit Hilfe des Schiebers des Spritzgusswerkzeugs in den Aufnahmeabschnitt eingepresst. Beim Einpressen des Verschlusses in den Aufnahmeabschnitt werden der Verschluss und/oder der Aufnahmeabschnitt vorzugsweise elastisch verformt. Hierdurch wird eine radiale Vorspannung des Verschlusses in dem Aufnahmeabschnitt erreicht. Dies gewährleistet die Dichtheit. Unter radial ist vorliegend eine Richtung senkrecht zu der Mittelachse des Aufnahmeabschnitts zu verstehen.

Weiterhin wird ein Kunststoffbauteil mit einem spritzgegossenen Basiskörper, der eine Bohrung aufweist, und einem spritzgegossenen Verschluss zum Verschließen der Bohrung vorgeschlagen, wobei der Verschluss zum Verschließen der Bohrung von einem Ausgangszustand, in dem die Bohrung beidseitig offen ist, in einen Endzustand, in dem die Bohrung einseitig verschlossen ist, relativ zu dem Basiskörper verlagerbar ist, wobei der Verschluss zylinderförmig ist und zum Verschließen der Bohrung in einen zylinderförmigen Aufnahmeabschnitt des Basiskörpers einpressbar ist, wobei eine Mittelachse der Bohrung in einem Winkel von 90° +/- 10° zu einer Mittelachse des Aufnahmeabschnitts angeordnet ist, und wobei der Verschluss in den Aufnahmeabschnitt eingepresst ist. Das Kunststoffbauteil ist ein Gehäuse einer Saugstrahlpumpe.

Die Bohrung wird mit Hilfe des Kerns des Spritzgusswerkzeugs hergestellt. In dem Ausgangszustand ist der Verschluss insbesondere außerhalb des Aufnahmeabschnitts angeordnet und im Endzustand ist der Verschluss insbesondere innerhalb des Aufnahmeabschnitts angeordnet.

Gemäß einer Ausführungsform ist der Verschluss materialeinstückig mit dem Basiskörper ausgebildet, wobei der Verschluss bei dem Verlagern von dem Ausgangszustand in den Endzustand von dem Basiskörper trennbar, insbesondere abbrechbar, ist.

Vorzugsweise ist der Verschluss mit Hilfe des Kunststofffilms mit dem Basiskörper fest verbunden und materialeinstückig mit diesem ausgebildet. Das heißt, der Verschluss und der Basiskörper werden gemeinsam in dem Spritzgusswerkzeug hergestellt.

Der Verschluss ist zylinderförmig und ist zum Verschließen der Bohrung in einen zylinderförmigen Aufnahmeabschnitt des Basiskörpers einpressbar.

Vorzugsweise ist der Außendurchmesser des Verschlusses zumindest geringfügig größer als der Innendurchmesser des Aufnahmeabschnitts, wodurch ein sicherer Sitz des Verschlusses in dem Aufnahmeabschnitt gewährleistet ist. Vorzugsweise sitzt der Verschluss so in dem Aufnahmeabschnitt, dass der Verschluss nur durch ein Zerstören desselben wieder aus dem Aufnahmeabschnitt entnehmbar ist.

Gemäß einer weiteren Ausführungsform ist eine Mittelachse der Bohrung senkrecht zu einer Mittelachse des Aufnahmeabschnitts angeordnet.

Vorzugsweise ist eine Mittelachse des Verschlusses koaxial zu der Mittelachse des Aufnahmeabschnitts angeordnet. Unter senkrecht ist vorliegend ein Winkel von 90° +/- 10°, weiter bevorzugt von 90° +/- 5°, weiter bevorzugt von 90° +/- 1°, weiter bevorzugt von genau 90° zu verstehen.

Weitere mögliche Implementierungen des Verfahrens und/oder des Kunststoffbauteils umfassen auch nicht explizit genannte Kombinationen von zuvor oder im Folgenden bezüglich der Ausführungsbeispiele beschriebene Merkmale oder Ausführungsformen. Dabei wird der Fachmann auch Einzelaspekte als Verbesserungen oder Ergänzungen zu der jeweiligen Grundform des Verfahrens und/oder des Kunststoffbauteils hinzufügen.

Weitere vorteilhafte Ausgestaltungen und Aspekte des Verfahrens und/oder des Kunststoffbauteils sind Gegenstand der Unteransprüche sowie der im Folgenden beschriebenen Ausführungsbeispiele des Verfahrens und/oder des Kunststoffbauteils. Im Weiteren werden das Verfahren und/oder das Kunststoffbauteil anhand von bevorzugten Ausführungsformen unter Bezugnahme auf die beigelegten Figuren näher erläutert.
Fig. 1 zeigt eine schematische perspektivische Ansicht einer Ausführungsform eines Kunststoffbauteils;
Fig. 2 zeigt eine schematische Schnittansicht des Kunststoffbauteils gemäß Fig. 1;
Fig. 3 zeigt eine schematische Detailansicht der Fig. 2;
Fig. 4 zeigt eine weitere schematische Schnittansicht des Kunststoffbauteils gemäß Fig. 1; und
Fig. 5 zeigt ein schematisches Blockdiagramm einer Ausführungsform eines Verfahrens zum Herstellen des Kunststoffbauteils gemäß Fig. 1.

In den Figuren sind gleiche oder funktionsgleiche Elemente mit denselben Bezugszeichen versehen worden, sofern nichts anderes angegeben ist.

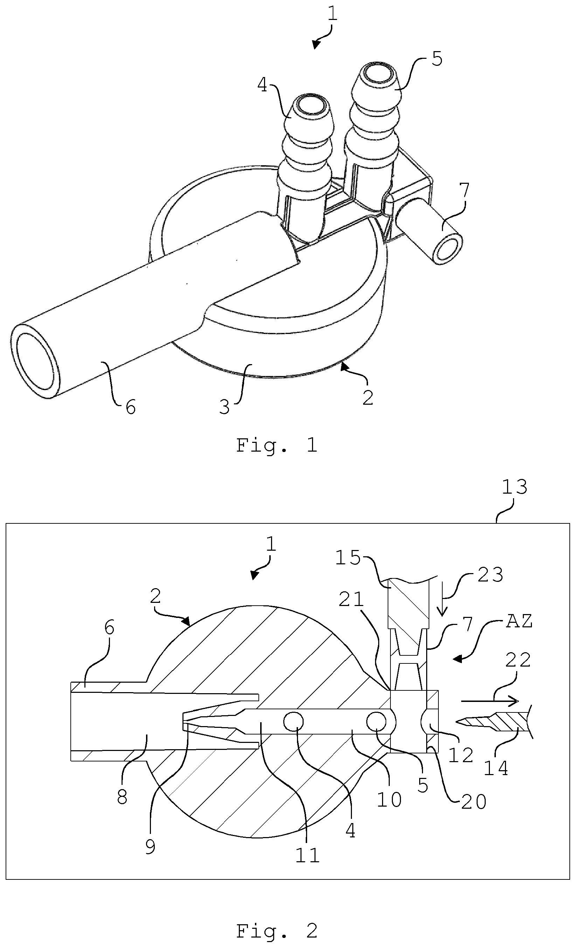

Die Fig. 1 zeigt eine schematische perspektivische Ansicht eines Kunststoffbauteils 1. Das Kunststoffbauteil 1 kann ein Gehäuse einer Saugstrahlpumpe oder einer sogenannten Jet Pump sein. Saugstrahlpumpen werden beispielsweise zur Förderung von Kraftstoffen im Automobilbereich eingesetzt. Derartige Saugstrahlpumpen arbeiten nach dem Prinzip einer Venturidüse.

Das Kunststoffbauteil 1 ist vorzugsweise aus einem thermoplastischen Kunststoffmaterial in einem Spritzgussprozess hergestellt. Das Kunststoffbauteil 1 umfasst einen Basiskörper 2 mit einem plattenförmigen Basisabschnitt 3, der einen kreisrunden Querschnitt aufweisen kann. Oberseitig an dem Basisabschnitt 3 sind zwei Anschlussabschnitte 4, 5 vorgesehen. Die Anschlussabschnitte 4, 5 können anstatt vertikal auch horizontal angeordnet sein. Die Anzahl der Anschlussabschnitte 4, 5 ist beliebig. Senkrecht zu den Anschlussabschnitten 4, 5 ist ein weiterer Anschlussabschnitt 6 vorgesehen. Der Basiskörper 2 kann auch jede beliebige andere Geometrie aufweisen. Das Kunststoffbauteil 1 umfasst weiterhin einen Verschluss 7, dessen Funktion im Folgenden noch erläutert wird.

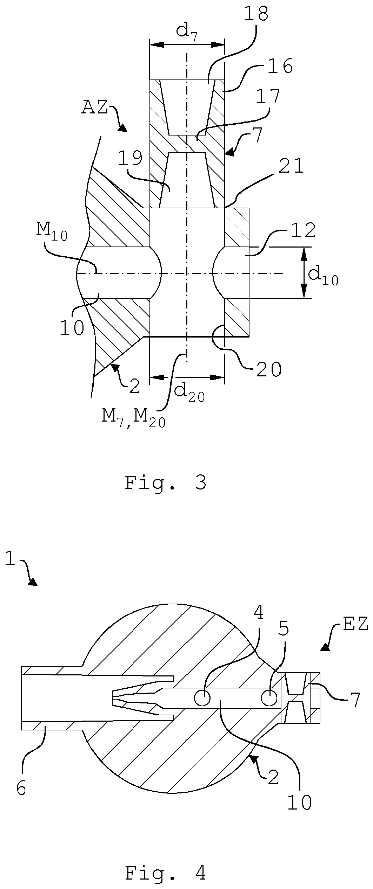

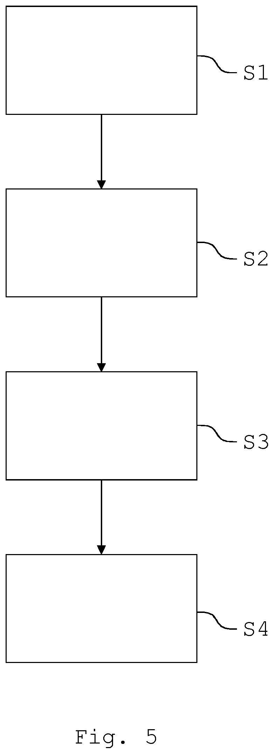

Die Fig. 2 bis 4 zeigen das Kunststoffbauteil 1 jeweils in einer Schnittansicht, wobei die Fig. 3 eine vergrößerte Detailansicht der Fig. 2 ist. Das Kunststoffbauteil 1 kann mit Hilfe eines Verfahrens gemäß Fig. 5 hergestellt werden. Im Folgenden wird auf die Fig. 2 bis 5 gleichzeitig Bezug genommen.

Der Anschlussabschnitt 6 ist rohrförmig und weist innenseitig eine Ausnehmung oder Bohrung 8 auf. In die Bohrung 8 ragt eine Düse 9 hinein. Koaxial zu der Bohrung 8 ist eine weitere Ausnehmung oder Bohrung 10 in dem Basiskörper 2 vorgesehen. Die Bohrung 10 umfasst einen ersten Endabschnitt 11, an dem die Düse 9 vorgesehen ist, sowie einen zweiten Endabschnitt 12, dem der Verschluss 7 zugeordnet ist. Das Kunststoffbauteil 1, das heißt der Basiskörper 2, und der Verschluss 7 werden gemeinsam und insbesondere gleichzeitig in einem Kunststoffspritzgusswerkzeug oder Spritzgusswerkzeug 13 mit Hilfe des Verfahrens gemäß Fig. 5 hergestellt.

Das Spritzgusswerkzeug 13 ist stark vereinfacht in der Fig. 2 gezeigt. Das Spritzgusswerkzeug 13 kann beispielsweise zwei Formhälften aufweisen, die ein Negativ einer Außengeometrie des Kunststoffbauteils 1 bilden. Das Spritzgusswerkzeug 13 kann weiterhin zumindest einen stiftförmigen Kern 14 zum Bilden der Bohrung 10 aufweisen. Das Spritzgusswerkzeug 13 kann eine Vielzahl verschiedenartiger Kerne aufweisen. Beispielsweise kann das Spritzgusswerkzeug 13 auch einen Kern zur Ausbildung der Bohrung 8 umfassen. Zum Bilden der Bohrung 10 in dem Basiskörper 2 wird der Kern 14 mit dem Kunststoffmaterial umspritzt und nach dem Erstarren desselben aus diesem herausgezogen.

Das Spritzgusswerkzeug 13 kann weiterhin einen beweglichen Schieber 15 aufweisen. Der Kern 14 und der Schieber 15 sind in die Formhälften des Spritzgusswerkzeugs 13 hinein und aus diesen herausfahrbar und bilden mit den Formhälften eine Kavität des Spritzgusswerkzeugs 13. Die Kavität ist ein Negativ des Kunststoffbauteils 1 und wird zum Bilden des Kunststoffbauteils 1 mit aufgeschmolzenem Kunststoffmaterial befüllt. Wie die Fig. 3 zeigt, weist der Verschluss 7 eine zylinderförmige Geometrie mit einem kreisrunden Basisquerschnitt und einem Außendurchmesser d₇ auf. Der Verschluss 7 weist einen zylinderförmigen Mantelabschnitt 16 sowie eine senkrecht zu dem Mantelabschnitt 16 positionierte Zwischenwand 17 auf. Oberseitig und unterseitig der Zwischenwand 17 ist jeweils eine kegelstumpfförmige Ausnehmung 18, 19 vorgesehen. Durch das Vorsehen der kegelstumpfförmigen Ausnehmungen 18, 19 kann Kunststoffmaterial eingespart werden, eine Verwölbung des Verschlusses 7 beim Abkühlen des Kunststoffmaterials vermieden werden und eine elastische Verformbarkeit des Verschlusses 7 in radialer Richtung erleichtert werden.

An dem zweiten Endabschnitt 12 der Bohrung 10 ist ein zylinderförmiger Aufnahmeabschnitt 20 vorgesehen. Eine Mittelachse M₂₀ des Aufnahmeabschnitts 20 beziehungsweise eine Mittelachse M₇ des Verschlusses 7 ist senkrecht zu einer Mittelachse M₁₀ der Bohrung 10 positioniert. Der Aufnahmeabschnitt 20 und der Verschluss 7 können einen kreisrunden, quadratischen, ovalen, vieleckigen oder beliebigen Querschnitt aufweisen. Vorzugsweise weisen der Aufnahmeabschnitt 20 und der Verschluss 7 jedoch einen kreisrunden Querschnitt auf. Ein Innendurchmesser d₂₀ des Aufnahmeabschnitts 20 ist zumindest geringfügig kleiner als der Außendurchmesser d₇ des Verschlusses 7. Weiterhin ist der Innendurchmesser d₂₀ des Aufnahmeabschnitts 20 größer als ein Innendurchmesser d₁₀ der Bohrung 10. Der Aufnahmeabschnitt 20 und die Bohrung 10 sind so angeordnet, dass der Aufnahmeabschnitt 20 die Bohrung 10 schneidet.

Für die Funktionalität des Kunststoffbauteils 1 und insbesondere der Düse 9 ist es erforderlich, dass die Bohrung 10 an dem zweiten Endabschnitt 12 verschlossen wird. Da ein Durchmesser der Düse 9 deutlich kleiner ist als der Innendurchmesser d₁₀ der Bohrung 10, kann der Kern 14 nur durch den zweiten Endabschnitt 12 aus der Bohrung 10 herausgezogen werden. Ein einseitiges Verschließen der Bohrung 10 an dem zweiten Endabschnitt 12 ist also während dem Spritzgießen des Kunststoffbauteils 1 nicht möglich. Aus diesem Grund wird der zweite Endabschnitt 12 unmittelbar nach dem Spritzgießen noch im Spritzgusswerkzeug 13 mit Hilfe des Verschlusses 7 verschlossen.

Hierzu ist der Verschluss 7 mit Hilfe einer Dünnstelle oder einem Kunststofffilm 21 materialeinstückig mit dem Basiskörper 2 verbunden. Beim Spritzgießen des Kunststoffbauteils 1 kann das geschmolzene Kunststoffmaterial durch eine zu dem Kunststofffilm 21 korrespondierende Dünnstelle in dem Spritzgusswerkzeug 13 von dem Basiskörper 2 in den Verschluss 7 oder umgekehrt hineinströmen. Hierzu können an dem Basiskörper 2 und/oder an dem Verschluss 7 jeweils eine oder mehrere Einspritzdüsen vorgesehen sein.

Der Verschluss 7 ist, wie in den Fig. 2 und 3 gezeigt, in dem Spritzgusswerkzeug 13 mit Hilfe des Schiebers 15 von einem Ausgangszustand AZ, in dem die Bohrung 10 beidseitig offen ist, in einen Endzustand EZ verlagerbar, in dem die Bohrung 10 einseitig, das heißt, auf der Seite des zweiten Endabschnitts 12, verschlossen ist. Hierzu wird der Verschluss 7 mit Hilfe des Schiebers 15 nach dem Herausziehen des Kerns 14 in den Aufnahmeabschnitt 20 eingepresst. Dabei ist der Verschluss 7 bei dem Verlagern von dem Ausgangszustand AZ in den Endzustand EZ von dem Basiskörper 2 dadurch trennbar, dass der Kunststofffilm 21 reißt oder bricht.

Bei dem Verfahren zum Herstellen des Kunststoffbauteils 1 gemäß Fig. 5 wird in einem Schritt S1 der Basiskörper 2 mit Hilfe des Spritzgusswerkzeugs 13 spritzgegossen, wobei zum Bilden der Bohrung 10 in dem Basiskörper 2 der stiftförmige Kern 14 mit dem Kunststoffmaterial umspritzt wird. In einem Schritt S2 wird mit Hilfe des Spritzgusswerkzeugs 13 der Verschluss 7 zum Verschließen der Bohrung 10 spritzgegossen. Die Schritte S1 und S2 können gleichzeitig in demselben Spritzgusswerkzeug 13 durchgeführt werden.

In einem Schritt S3 wird der Kern 14 aus der Bohrung 10 entfernt. Hierzu wird der Kern 14, wie in der Fig. 2 mit Hilfe eines Pfeils 22 gezeigt, aus der Bohrung 10 herausgezogen. Zu diesem Zeitpunkt ist das Kunststoffmaterial bereits soweit abgekühlt, dass die Bohrung 10 ihre Form beibehält. Mit dem Kern 14 wird auch die Düse 9 an die Bohrung 10 angeformt. In einem Schritt S4 wird die Bohrung 10 einseitig, das heißt auf der Seite des zweiten Endabschnitts 12, mit Hilfe des Verschlusses 7 verschlossen. Die Schritte S1 bis S4 können alle mit Hilfe und in demselben Spritzgusswerkzeug 13 durchgeführt werden. Hierdurch können zusätzliche Montageschritte entfallen.

Bei dem Spritzgießen des Basiskörpers 2 und des Verschlusses 7 wird der Verschluss 7 materialeinstückig mit dem Basiskörper 2 gefertigt, wobei der Verschluss 7 mit Hilfe des Kunststofffilms 21 materialeinstückig mit dem Basiskörper 2 verbunden wird. In dem Schritt S4 wird der Verschluss 7 vor oder bei dem Verschließen der Bohrung 10 von dem Basiskörper 2 getrennt. Insbesondere wird der Verschluss 7 von dem Basiskörper 2 abgebrochen oder abgerissen. Hierbei wird der Kunststofffilm 21 zerstört.

Zum Verschließen der Bohrung 10 wird mit Hilfe des Schiebers 15 der Verschluss 7 in den Aufnahmeabschnitt 20 eingepresst. Hierzu wird der Schieber 15 in die Richtung des Verschlusses 7, wie in der Fig. 2 mit Hilfe eines Pfeils 23 gezeigt, bewegt. Der Schieber 15 kann dabei in die Ausnehmung 18 des Verschlusses 7 eingreifen. Dadurch, dass der Außendurchmesser d₇ des Verschlusses 7 größer als der Innendurchmesser d₂₀ des Aufnahmeabschnitts 20 ist, kann der Verschluss 7 in den Aufnahmeabschnitt eingepresst werden, wodurch ein sicherer Sitz des Verschlusses 7 in dem Aufnahmeabschnitt 20 gewährleistet ist und eine fluiddichte Abdichtung des zweiten Endabschnitts 12 der Bohrung 10 gewährleistet ist. Bei dem Einpressen des Verschlusses 7 in den Aufnahmeabschnitt 20 können sich der Verschluss 7 und/oder der Aufnahmeabschnitt 20 federelastisch verformen. Hierdurch wird eine radiale Vorspannung des Verschlusses 7 in dem Aufnahmeabschnitt 20 erreicht. Unter radial ist hier eine Richtung senkrecht zu den Mittelachsen M₇, M₂₀ zu verstehen.

Dadurch, dass die Mittelachse M₇ des Verschlusses 7 beziehungsweise die Mittelachse M₂₀ des Aufnahmeabschnitts 20 senkrecht zu der Mittelachse M₁₀ der Bohrung 10 angeordnet ist, ist auch bei hohen Drücken gewährleistet, dass der Verschluss 7 nicht aus dem Aufnahmeabschnitt 20 herausgedrückt wird, da der Druck in Richtung der Mittelachse M₁₀ und damit senkrecht zu den Mittelachsen M₇, M₂₀ wirkt.

Obwohl die vorliegende Erfindung anhand von Ausführungsbeispielen beschrieben wurde, ist sie vielfältig modifizierbar.

### BEZUGSZEICHENLISTE

- 1: Kunststoffbauteil
- 2: Basiskörper
- 3: Basisabschnitt
- 4: Anschlussabschnitt
- 5: Anschlussabschnitt
- 6: Anschlussabschnitt
- 7: Verschluss
- 8: Bohrung
- 9: Düse
- 10: Bohrung
- 11: Endabschnitt
- 12: Endabschnitt
- 13: Spritzgusswerkzeug
- 14: Kern
- 15: Schieber
- 16: Mantelabschnitt
- 17: Zwischenwand
- 18: Ausnehmung
- 19: Ausnehmung
- 20: Aufnahmeabschnitt
- 21: Kunststofffilm
- 22: Pfeil
- 23: Pfeil

- AZ: Ausgangszustand
- d₇: Außendurchmesser
- d₁₀: Innendurchmesser
- d₂₀: Innendurchmesser
- EZ: Endzustand
- M₇: Mittelachse
- M₁₀: Mittelachse
- M₂₀: Mittelachse
- S1: Schritt
- S2: Schritt
- S3: Schritt
- S4: Schritt

## Patentansprüche

1. Verfahren zum Herstellen eines Kunststoffbauteils (1), das ein Gehäuse einer Saugstrahlpumpe ist, mit den folgenden Schritten:
Spritzgießen (S1) eines Basiskörpers (2) des Kunststoffbauteils (1) mit Hilfe eines Spritzgusswerkzeugs (13), wobei zum Bilden einer Bohrung (10) in dem Basiskörper (2) ein stiftförmiger Kern (14) des Spritzgusswerkzeugs (13) mit einem Kunststoffmaterial umspritzt wird,
Spritzgießen (S2) eines Verschlusses (7) des Kunststoffbauteils (1) zum Verschließen der Bohrung (10),
Entfernen (S3) des Kerns (14) aus der Bohrung (10), und
Verschließen (S4) der Bohrung (10) mit Hilfe des Verschlusses (7), wobei der Basiskörper (2) so gefertigt wird, dass dieser einen Aufnahmeabschnitt (20) zum Aufnehmen des Verschlusses (7) aufweist, wobei eine Mittelachse (M₁₀) der Bohrung (10) in einem Winkel von 90° +/- 10° zu einer Mittelachse (M₂₀) des Aufnahmeabschnitts (20) angeordnet wird, wobei der Verschluss (7) in den Aufnahmeabschnitt (20) eingepresst wird, und wobei das Spritzgießen (S1) des Basiskörpers (2), das Spritzgießen (S2) des Verschlusses (7), das Entfernen (S3) des Kerns (14) und das Verschließen (S4) der Bohrung (10) mit Hilfe desselben Spritzgusswerkzeugs (13) durchgeführt werden.

2. Verfahren nach Anspruch 1, wobei das Spritzgießen (S1) des Basiskörpers (2) und das Spritzgießen (S2) des Verschlusses (7) gleichzeitig durchgeführt werden.

3. Verfahren nach Anspruch 1 oder 2, wobei der Verschluss (7) materialeinstückig mit dem Basiskörper (2) gefertigt wird.

4. Verfahren nach Anspruch 3, wobei der Verschluss (7) mit Hilfe eines Kunststofffilms (21) materialeinstückig mit dem Basiskörper (2) verbunden wird.

5. Verfahren nach Anspruch 3 oder 4, wobei der Verschluss (7) vor oder bei dem Verschließen (S4) der Bohrung (10) von dem Basiskörper (2) getrennt, insbesondere abgebrochen, wird.

6. Verfahren nach einem der Ansprüche 1 - 5, wobei die Bohrung (10) so gefertigt wird, dass diese an einem ersten Endabschnitt (11) eine Düse (9) aufweist und wobei an einem zweiten Endabschnitt (12) der Bohrung (10) der Verschluss (7) angebracht wird.

7. Verfahren nach einem der Ansprüche 1 - 6, wobei der Verschluss (7) und der Aufnahmeabschnitt (20) so gefertigt werden, dass ein Außendurchmesser (d₇) des Verschlusses (7) größer als ein Innendurchmesser (d₂₀) des Aufnahmeabschnitts (20) ist.

8. Kunststoffbauteil (1), das ein Gehäuse einer Saugstrahlpumpe ist, mit:
einem spritzgegossenen Basiskörper (2), der eine Bohrung (10) aufweist, und
einem spritzgegossenen Verschluss (7) zum Verschließen der Bohrung (10), wobei der Verschluss (7) zum Verschließen der Bohrung (10) von einem Ausgangszustand (AZ), in dem die Bohrung (10) beidseitig offen ist, in einen Endzustand (EZ), in dem die Bohrung (10) einseitig verschlossen ist, relativ zu dem Basiskörper (2) verlagerbar ist, wobei der Verschluss (7) zylinderförmig ist und zum Verschließen der Bohrung (10) in einen zylinderförmigen Aufnahmeabschnitt (20) des Basiskörpers (2) einpressbar ist, wobei eine Mittelachse (M₁₀) der Bohrung (10) in einem Winkel von 90° +/- 10° zu einer Mittelachse (M₂₀) des Aufnahmeabschnitts (20) angeordnet ist, und wobei der Verschluss (7) in den Aufnahmeabschnitt (20) eingepresst ist.

9. Kunststoffbauteil nach Anspruch 8, wobei der Verschluss (7) materialeinstückig mit dem Basiskörper (2) ausgebildet ist und wobei der Verschluss (7) bei dem Verlagern von dem Ausgangszustand (AZ) in den Endzustand (EZ) von dem Basiskörper (2) trennbar, insbesondere abbrechbar, ist.

## Claims

1. Method for manufacturing a plastic component (1) which is a housing of a suction jet pump, comprising the following steps:
injection molding (S1) of a base body (2) of the plastic component (1) by means of an injection molding tool (13), wherein a pin-shaped core (14) of the injection molding tool (13) is overmolded with a plastic material for forming a bore (10) in the base body (2),
injection molding (S2) a closure (7) of the plastic component (1) to close the bore (10),
removing (S3) the core (14) from the bore (10), and
closing (S4) the bore (10) by means of the closure (7), wherein the base body (2) is manufactured to have a receiving portion (20) for receiving the closure (7), wherein a central axis (M₁₀) of the bore (10) is arranged at an angle of 90° +/-10° to a central axis (M₂₀) of the receiving portion (20), wherein the closure (7) is pressed into the receiving portion (20), and wherein the injection molding (S1) of the base body (2), the injection molding (S2) of the closure (7), the removal (S3) of the core (14) and the closing (S4) of the bore (10) are performed by means of the same injection molding tool (13).

2. Method according to claim 1, wherein the injection molding (S1) of the base body (2) and the injection molding (S2) of the closure (7) are performed simultaneously.

3. Method according to claim 1 or 2, wherein the closure (7) is manufactured integrally with the base body (2).

4. Method according to claim 3, wherein the closure (7) is integrally connected to the base body (2) by means of a plastic film (21).

5. Method according to claim 3 or 4, wherein the closure (7) is separated, in particular broken off, from the base body (2) before or during the closing (S4) of the bore (10).

6. Method according to one of claims 1 - 5, wherein the bore (10) is manufactured such that it has a nozzle (9) at a first end portion (11), and wherein the closure (7) is attached to a second end portion (12) of the bore (10).

7. Method according to one of claims 1 - 6, wherein the closure (7) and the receiving portion (20) are manufactured such that an outer diameter (d₇) of the closure (7) is larger than an inner diameter (d₂₀) of the receiving portion (20).

8. Plastic component (1) which is a housing of a suction jet pump, comprising:
an injection-molded base body (2) comprising a bore (10), and
an injection-molded closure (7) for closing the bore (10), wherein the closure (7) is displaceable relative to the base body (2) for closing the bore (10) from an initial state (AZ) in which the bore (10) is open on both sides to a final state (EZ) in which the bore (10) is closed on one side, wherein the closure (7) is cylindrical and can be pressed into a cylindrical receiving portion (20) of the base body (2) to close the bore (10), wherein a central axis (M₁₀) of the bore (10) is arranged at an angle of 90° +/- 10° to a central axis (M₂₀) of the receiving portion (20), and wherein the closure (7) is pressed into the receiving portion (20).

9. Plastic component according to claim 8, wherein the closure (7) is formed integrally with the base body (2), and wherein the closure (7) can be separated, in particular broken off, from the base body (2) during the displacement from the initial state (AZ) to the final state (EZ).

## Revendications

1. Procédé de fabrication d'un composant en plastique (1) qui est un boîtier d'une pompe à jet aspirant, comprenant les étapes suivantes :
moulage par injection (S1) d'un corps de base (2) du composant en plastique (1) au moyen d'un outil de moulage par injection (13), dans lequel un noyau (14) en forme de tige de l'outil de moulage par injection (13) est enrobé d'une matière plastique pour former un perçage (10) dans le corps de base (2),
moulage par injection (S2) d'une fermeture (7) du composant en plastique (1) pour fermer le perçage (10),
retrait (S3) du noyau (14) du perçage (10), et
fermeture (S4) du perçage (10) au moyen de la fermeture (7), dans lequel le corps de base (2) est fabriqué de telle sorte qu'il a une partie de réception (20) pour recevoir la fermeture (7), dans lequel un axe central (M₁₀) du perçage (10) est disposé à un angle de 90° +/- 10° par rapport à un axe central (M₂₀) de la partie de réception (20), dans lequel la fermeture (7) est pressée dans la partie de réception (20), et dans lequel le moulage par injection (S1) du corps de base (2), le moulage par injection (S2) de la fermeture (7), le retrait (S3) du noyau (14) et la fermeture (S4) du perçage (10) sont réalisés au moyen du même outil de moulage par injection (13).

2. Procédé selon la revendication 1, dans lequel le moulage par injection (S1) du corps de base (2) et le moulage par injection (S2) de la fermeture (7) sont réalisés simultanément.

3. Procédé selon la revendication 1 ou 2, dans lequel la fermeture (7) est fabriquée matériellement d'un seul tenant avec le corps de base (2).

4. Procédé selon la revendication 3, dans lequel la fermeture (7) est reliée matériellement d'un seul tenant au corps de base (2) au moyen d'un film plastique (21).

5. Procédé selon la revendication 3 ou 4, dans lequel la fermeture (7) est séparée, en particulier rompue, du corps de base (2) avant ou pendant la fermeture (S4) du perçage (10).

6. Procédé selon l'une quelconque des revendications 1 à 5, dans lequel le perçage (10) est fabriqué de telle sorte qu'il comprend une buse (9) au niveau d'une première partie d'extrémité (11) et dans lequel la fermeture (7) est fixée à une seconde partie d'extrémité (12) du perçage (10).

7. Procédé selon l'une quelconque des revendications 1 à 6, dans lequel la fermeture (7) et la partie de réception (20) sont fabriquées de telle sorte qu'un diamètre extérieur (d₇) de la fermeture (7) est supérieur à un diamètre intérieur (d₂₀) de la partie de réception (20).

8. Composant en plastique (1) qui est un boîtier d'une pompe à jet aspirant, comprenant :
un corps de base (2) moulé par injection comportant un perçage (10) ; et
une fermeture (7) moulé par injection pour fermer le perçage (10), dans lequel la fermeture (7) est déplaçable par rapport au corps de base (2) pour fermer le perçage (10) d'un état initial (AZ) dans lequel le perçage (10) est ouvert des deux côtés à un état final (EZ) dans lequel le perçage (10) est fermé d'un côté, dans lequel la fermeture (7) est cylindrique et peut être pressée dans une partie de réception cylindrique (20) du corps de base (2) pour fermer le perçage (10), dans lequel un axe central (M₁₀) du perçage (10) est disposé à un angle de 90° +/-10° par rapport à un axe central (M₂₀) de la partie de réception (20), et dans lequel la fermeture (7) est pressée dans la partie de réception (20).

9. Composant en plastique selon la revendication 8, dans lequel la fermeture (7) est formée matériellement d'un seul tenant avec le corps de base (2) et dans lequel la fermeture (7) peut être séparée, en particulier rompue, du corps de base (2) pendant le déplacement de l'état initial (AZ) à l'état final (EZ).
